# EUROPEAN PATENT APPLICATION

(11) **EP 2 811 808 A1**
(43) Date of publication of application: **10.12.2014**
(21) Application number: 14159315.2
(22) Date of filing: 13.03.2014
(51) Int. Cl.: H04W 84/04, H04W 72/12, H04W 48/16, H04W 72/04

(54) **Method and Apparatus for Triggering a Regular Buffer Status Report (BSR) in Dual Connectivity**

(30) Priority: 01.04.2013 US 201361807103 P; 25.11.2013 US 201361908356 P
(71) Applicant: Innovative Sonic Corporation, Taipei City 10049 (TW)
(72) Inventor: Kuo, Richard Lee-Chee, 10049 Taipei City (TW)
(74) Representative: Hoefer & Partner

(57) **Abstract**

A method and apparatus are disclosed for triggering a buffer status in dual connectivity, wherein a UE is served by a first eNB. The method includes the UE receives a first RRC, i.e. Radio Resource Control, message for adding a second cell controlled by a second eNB to the UE (705). The method also includes the UE triggers a Regular BSR for transmission to the second eNB when the second cell is added (710).

## Description

### CROSS-REFERENCE TO RELATED APPLICATIONS

The present Application claims the benefit of U.S. Provisional Patent Application Serial No. 61/807,103 filed on April 1, 2013 and U.S. Provisional Patent Application Serial No. 61/908,356 filed on November 25, 2013. The entire disclosures of these U.S. Provisional Patent Applications are incorporated herein by reference.

### FIELD

This disclosure generally relates to wireless communication networks, and more particularly, to a method and apparatus for triggering a regular BSR in dual connectivity.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus for triggering a buffer status in dual connectivity, wherein a UE (User Equipment) is served by a first eNB (evolved Node B), are defined in independent claims 1, 5, and 14, respectively. The respective dependent claims define preferred embodiments thereof, respectively. The method according to a first aspect includes the UE receives a first RRC (Radio Resource Control) message for adding a second cell controlled by a second eNB to the UE. The method also includes the UE triggers a Regular BSR for transmission to the second eNB when the second cell is added. Further, methods and apparatus for transferring a buffer status for dual connectivity, wherein a UE (User Equipment) is served by a first eNB (evolved Node B), are defined in independent claims 11 and 15, respectively.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 illustrates a Short BSR (Buffer Status Report) and Truncated BSR MAC (Medium Access Control) control element shown in Figure 6.1.3.1-1 of 3GPP TS 36.321 v11.2.0 according to one exemplary embodiment.
FIG. 6 illustrates a Long BSR MAC control element shown in Figure 6.1.3.1-2 of 3GPP TS 36.321 v11.2.0 according to one exemplary embodiment.
FIG. 7 illustrates a flow chart according to one exemplary embodiment.
FIG. 8 illustrates a flow chart according to one exemplary embodiment.
FIG. 9 illustrates a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. TS 36.321 V11.2.0 (2013-03), "E-UTRA; MAC protocol specification"; TR 36.392 v12.0.0 (2012-12), "Scenarios and Requirements for Small Cell Enhancements for E-UTRA and E-UTRAN"; RP-122033, "New Study Item Description: Small Cell enhancements for E-UTRA and E-UTRAN - Higher-layer aspects"; TS 36.300 V11.4.0 (2012-12), "E-UTRAN; Overall description; Stage 2"; TS 36.331 V11.3.0 (2013-03), "E-UTRA; RRC protocol specification"; R2-130570, "Scenarios and benefits of dual connectivity"; TR 36.842 V0.2.0, "Study on Small Cell Enhancements for E-UTRA and E-UTRAN - Higher-layer aspects"; R2-133992, "Handling of Activation/Deactivation in Dual Connectivity"; R2-134219, "Signalling procedures for dual connectivity"; R2-134266, "Detailed signaling procedure for dual connectivity"; R2-133855, "BSR and SR for dual connectivity"; and TS 36.321 V11.3.0, "E-UTRA MAC protocol specification". The standards and documents listed above are hereby expressly incorporated herein.

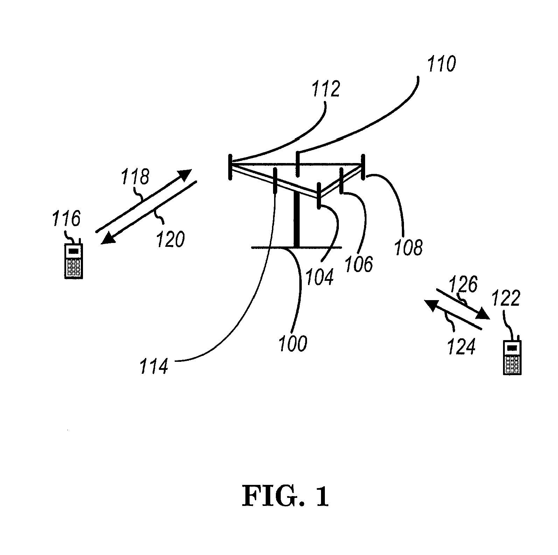

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

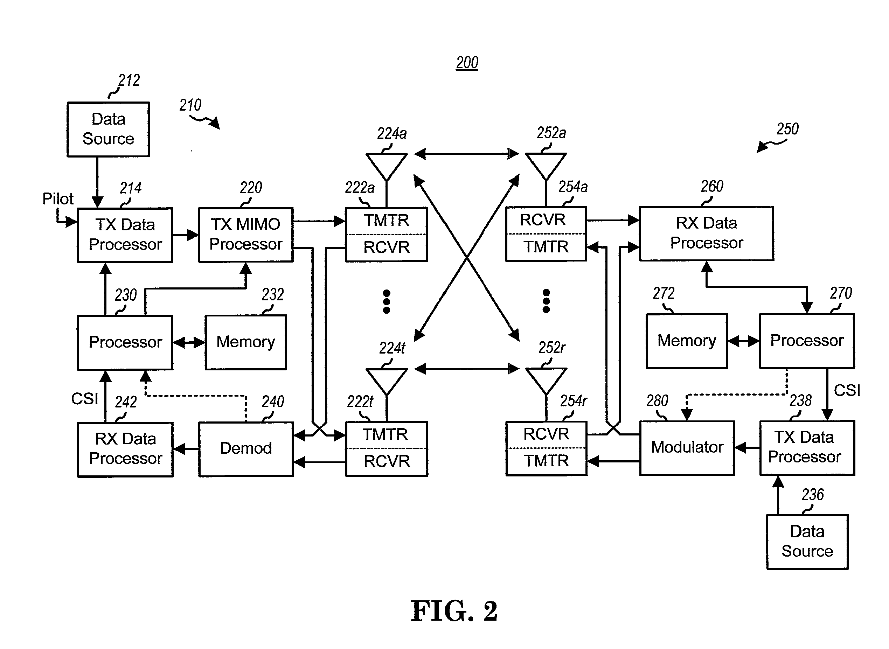

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

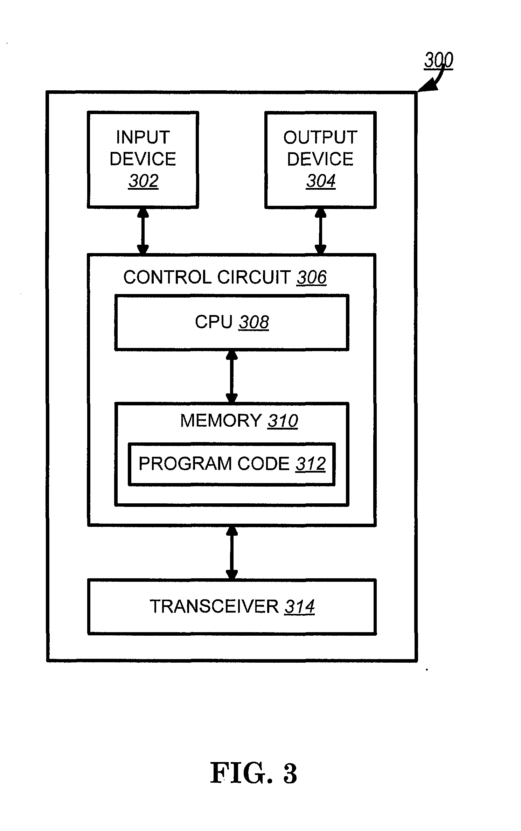

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

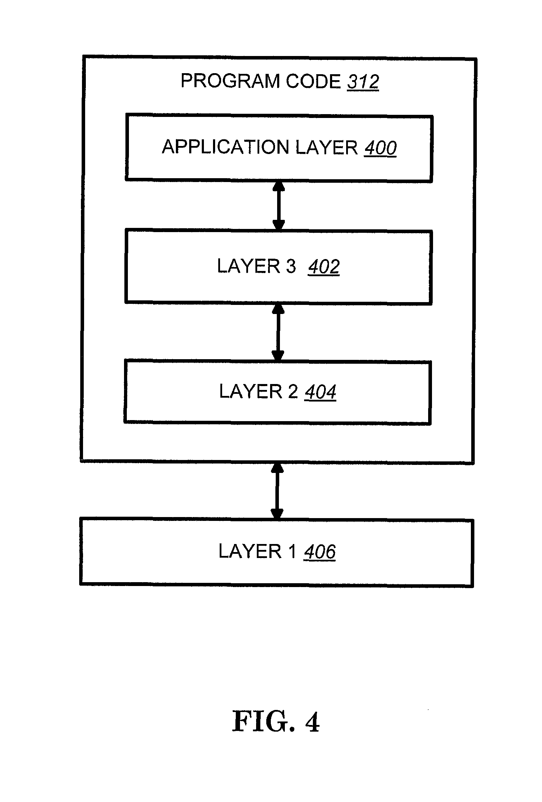

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

3GPP TS 36.321 v11.2.0 states:

### 5.4.4 Scheduling Request

The Scheduling Request (SR) is used for requesting UL-SCH resources for new transmission.

When an SR is triggered, it shall be considered as pending until it is cancelled. All pending SR(s) shall be cancelled and *sr-ProhibitTimer* shall be stopped when a MAC PDU is assembled and this PDU includes a BSR which contains buffer status up to (and including) the last event that triggered a BSR (see subclause 5.4.5), or when the UL grant(s) can accommodate all pending data available for transmission.

If an SR is triggered and there is no other SR pending, the UE shall set the SR_COUNTER to 0.

As long as one SR is pending, the UE shall for each TTI:
- if no UL-SCH resources are available for a transmission in this TTI:
   - if the UE has no valid PUCCH resource for SR configured in any TTI: initiate a Random Access procedure (see subclause 5.1) on the PCell and cancel all pending SRs;
   - else if the UE has a valid PUCCH resource for SR configured for this TTI and if this TTI is not part of a measurement gap and if *sr-ProhibitTimer* is not running:
      - if SR_COUNTER < *dsr-TransMax:*
         - increment SR_COUNTER by 1;
         - instruct the physical layer to signal the SR on PUCCH;
         - start the *sr-ProhibitTimer.*
      - else:
         - notify RRC to release PUCCH/SRS for all serving cells;
         - clear any configured downlink assignments and uplink grants;
         - initiate a Random Access procedure (see subclause 5.1) on the PCell and cancel all pending SRs.

### 5.4.5 Buffer Status Reporting

The Buffer Status reporting procedure is used to provide the serving eNB with information about the amount of data available for transmission in the UL buffers of the UE. RRC controls BSR reporting by configuring the two timers *periodicBSR-Timer* and *retxBSR-Timer* and by, for each logical channel, optionally signalling *logicalChannelGroup* which allocates the logical channel to an LCG [8].

For the Buffer Status reporting procedure, the UE shall consider all radio bearers which are not suspended and may consider radio bearers which are suspended.

A Buffer Status Report (BSR) shall be triggered if any of the following events occur:
- UL data, for a logical channel which belongs to a LCG, becomes available for transmission in the RLC entity or in the PDCP entity (the definition of what data shall be considered as available for transmission is specified in [3] and [4] respectively) and either the data belongs to a logical channel with higher priority than the priorities of the logical channels which belong to any LCG and for which data is already available for transmission, or there is no data available for transmission for any of the logical channels which belong to a LCG, in which case the BSR is referred below to as "Regular BSR";
- UL resources are allocated and number of padding bits is equal to or larger than the size of the Buffer Status Report MAC control element plus its subheader, in which case the BSR is referred below to as "Padding BSR";
- *retxBSR-Timer* expires and the UE has data available for transmission for any of the logical channels which belong to a LCG, in which case the BSR is referred below to as "Regular BSR";
- *periodicBSR-Timer* expires, in which case the BSR is referred below to as "Periodic BSR".

For Regular and Periodic BSR:
- if more than one LCG has data available for transmission in the TTI where the BSR is transmitted: report Long BSR;
- else report Short BSR.

For Padding BSR:
- if the number of padding bits is equal to or larger than the size of the Short BSR plus its subheader but smaller than the size of the Long BSR plus its subheader:
   - if more than one LCG has data available for transmission in the TTI where the BSR is transmitted: report Truncated BSR of the LCG with the highest priority logical channel with data available for transmission;
   - else report Short BSR.
- else if the number of padding bits is equal to or larger than the size of the Long BSR plus its subheader, report Long BSR.

If the Buffer Status reporting procedure determines that at least one BSR has been triggered and not cancelled:
- if the UE has UL resources allocated for new transmission for this TTI:
   - instruct the Multiplexing and Assembly procedure to generate the BSR MAC control element(s);
   - start or restart *periodicBSR-Timer* except when all the generated BSRs are Truncated BSRs;
   - start or restart *retxBSR-Timer.*
- else if a Regular BSR has been triggered:
   - if an uplink grant is not configured or the Regular BSR was not triggered due to data becoming available for transmission for a logical channel for which logical channel SR masking *(logicalChanneISR-Mask)* is setup by upper layers:
      - a Scheduling Request shall be triggered.

A MAC PDU shall contain at most one MAC BSR control element, even when multiple events trigger a BSR by the time a BSR can be transmitted in which case the Regular BSR and the Periodic BSR shall have precedence over the padding BSR.

The UE shall restart *retxBSR-Timer* upon indication of a grant for transmission of new data on any UL-SCH.

All triggered BSRs shall be cancelled in case the UL grant(s) in this subframe can accommodate all pending data available for transmission but is not sufficient to additionally accommodate the BSR MAC control element plus its subheader. All triggered BSRs shall be cancelled when a BSR is included in a MAC PDU for transmission.

The UE shall transmit at most one Regular/Periodic BSR in a TTI. If the UE is requested to transmit multiple MAC PDUs in a TTI, it may include a padding BSR in any of the MAC PDUs which do not contain a Regular/Periodic BSR.

All BSRs transmitted in a TTI always reflect the buffer status after all MAC PDUs have been built for this TTI. Each LCG shall report at the most one buffer status value per TTI and this value shall be reported in all BSRs reporting buffer status for this LCG.

NOTE: A Padding BSR is not allowed to cancel a triggered Regular/Periodic BSR. A Padding BSR is triggered for a specific MAC PDU only and the trigger is cancelled when this MAC PDU has been built.

### 5.13 Activation/Deactivation of SCells

If the UE is configured with one or more SCells, the network may activate and deactivate the configured SCells. The PCell is always activated. The network activates and deactivates the SCell(s) by sending the Activation/Deactivation MAC control element described in subclause 6.1.3.8. Furthermore, the UE maintains a *sCellDeactivationTimer* timer per configured SCell and deactivates the associated SCell upon its expiry. The same initial timer value applies to each instance of the *sCellDeactivationTimer* and it is configured by RRC. The configured SCells are initially deactivated upon addition and after a handover.

The UE shall for each TTI and for each configured SCell:
- if the UE receives an Activation/Deactivation MAC control element in this TTI activating the SCell, the UE shall in the TTI according to the timing defined in [2]:
   - activate the SCell; i.e. apply normal SCell operation including:
      - SRS transmissions on the SCell;
      - CQI/PMI/RI/PTI reporting for the SCell;
      - PDCCH monitoring on the SCell;
      - PDCCH monitoring for the SCell
   - start or restart the *sCellDeactivationTimer* associated with the SCell;
- else, if the UE receives an Activation/Deactivation MAC control element in this TTI deactivating the SCell; or
- if the *sCellDeactivationTimer* associated with the activated SCell expires in this TTI:
   - in the TTI according to the timing defined in [2]:
      - deactivate the SCell;
      - stop the *sCellDeactivationTimer* associated with the SCell;
      - flush all HARQ buffers associated with the SCell.
- if PDCCH on the activated SCell indicates an uplink grant or downlink assignment; or
- if PDCCH on the Serving Cell scheduling the activated SCell indicates an uplink grant or a downlink assignment for the activated SCell:
   - restart the *sCellDeactivationTimer* associated with the SCell;
- if the SCell is deactivated:
   - not transmit SRS on the SCell;
   - not report CQI/PMI/RI/PTI for the SCell;
   - not transmit on UL-SCH on the SCell;
   - not transmit on RACH on the SCell;
   - not monitor the PDCCH on the SCell;
   - not monitor the PDCCH for the SCell.
NOTE: When SCell is deactivated, the ongoing Random Access procedure on the SCell, if any, is aborted.
...

### 6.1.3.1 Buffer Status Report MAC Control Elements

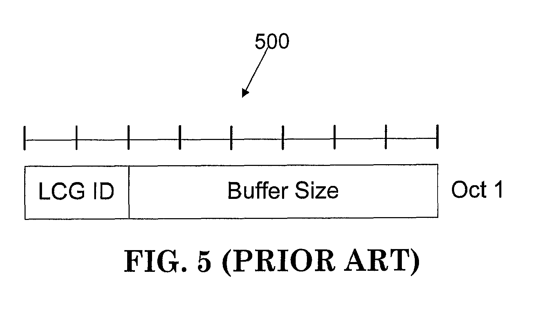

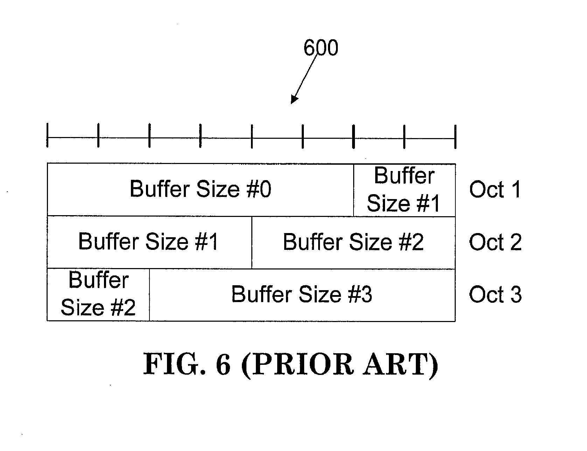

Buffer Status Report (BSR) MAC control elements consist of either:
- Short BSR and Truncated BSR format: one LCG ID field and one corresponding Buffer Size field ([FIG. 5]); or
- Long BSR format: four Buffer Size fields, corresponding to LCG IDs #0 through #3 ([FIG. 6]).

The BSR formats are identified by MAC PDU subheaders with LCIDs as specified in table 6.2.1-2. The fields LCG ID and Buffer Size are defined as follow:
- LCG ID: The Logical Channel Group ID field identifies the group of logical channel(s) which buffer status is being reported. The length of the field is 2 bits;
- Buffer Size: The Buffer Size field identifies the total amount of data available across all logical channels of a logical channel group after all MAC PDUs for the TTI have been built. The amount of data is indicated in number of bytes. It shall include all data that is available for transmission in the RLC layer and in the PDCP layer; the definition of what data shall be considered as available for transmission is specified in [3] and [4] respectively. The size of the RLC and MAC headers are not considered in the buffer size computation. The length of this field is 6 bits. If *extendedBSR-Sizes* is not configured, the values taken by the Buffer Size field are shown in Table 6.1.3.1-1. If *extendedBSR-Sizes* is configured, the values taken by the Buffer Size field are shown in Table 6.1.3.1-2.

In addition, 3GPP TR 36.392 v12.0.0 states:
Small cells using low power nodes are considered promising to cope with mobile traffic explosion, especially for hotspot deployments in indoor and outdoor scenarios. A low-power node generally means a node whose Tx power is lower than macro node and BS classes, for example Pico and Femto eNB are both applicable. Small cell enhancements for E-UTRA and E-UTRAN will focus on additional functionalities for enhanced performance in hotspot areas for indoor and outdoor using low power nodes.

This document captures the scenarios and requirements for small cell enhancements. 3GPP TR 36.913 [3] should be used as reference whenever applicable in order to avoid duplication of the requirements.

Furthermore, 3GPP RP-122033 states:

### 4 Objective *

The objective of this study is to identify potential technologies in the protocol and architecture for enhanced support of small cell deployment and operation which should satisfy scenarios and requirements defined in TR 36.932.

The study shall be conducted on the following aspects:
- Identify and evaluate the benefits of UEs having dual connectivity to macro and small cell layers served by different or same carrier and for which scenarios such dual connectivity is feasible and beneficial.
- Identify and evaluate potential architecture and protocol enhancements for the scenarios in TR 36.932 and in particular for the feasible scenario of dual connectivity and minimize core network impacts if feasible, including:
   o Overall structure of control and user plane and their relation to each other, e.g., supporting C-plane and U-plane in different nodes, termination of different protocol layers, etc.
- Identify and evaluate the necessity of overall Radio Resource Management structure and mobility enhancements for small cell deployments:
   o Mobility mechanisms for minimizing inter-node UE context transfer and signalling towards the core network.
   o Measurement and cell identification enhancements while minimizing increased UE battery consumption.

For each potential enhancement, the gain, complexity and specification impact should be assessed.

The study shall focus on potential enhancements which are not covered by other SI/WIs.

Also, 3GPP TS 36.300 provides the following description of Carrier Aggregation (CA):

### 5.5 Carrier Aggregation

In Carrier Aggregation (CA), two or more Component Carriers (CCs) are aggregated in order to support wider transmission bandwidths up to 100MHz. A UE may simultaneously receive or transmit on one or multiple CCs depending on its capabilities:
- A UE with single timing advance capability for CA can simultaneously receive and/or transmit on multiple CCs corresponding to multiple serving cells sharing the same timing advance (multiple serving cells grouped in one TAG);
- A UE with multiple timing advance capability for CA can simultaneously receive and/or transmit on multiple CCs corresponding to multiple serving cells with different timing advances (multiple serving cells grouped in multiple TAGs). E-UTRAN ensures that each TAG contains at least one serving cell;
- A non-CA capable UE can receive on a single CC and transmit on a single CC corresponding to one serving cell only (one serving cell in one TAG).

CA is supported for both contiguous and non-contiguous CCs with each CC limited to a maximum of 110 Resource Blocks in the frequency domain using the Rel-8/9 numerology.

It is possible to configure a UE to aggregate a different number of CCs originating from the same eNB and of possibly different bandwidths in the UL and the DL:
- The number of DL CCs that can be configured depends on the DL aggregation capability of the UE;
- The number of UL CCs that can be configured depends on the UL aggregation capability of the UE;
- It is not possible to configure a UE with more UL CCs than DL CCs;
- In typical TDD deployments, the number of CCs and the bandwidth of each CC in UL and DL is the same.
- The number of TAGs that can be configured depends on the TAG capability of the UE. CCs originating from the same eNB need not to provide the same coverage.

CCs shall be LTE Rel-8/9 compatible. Nevertheless, existing mechanisms (e.g. barring) may be used to avoid Rel-8/9 UEs to camp on a CC.

The spacing between centre frequencies of contiguously aggregated CCs shall be a multiple of 300 kHz. This is in order to be compatible with the 100 kHz frequency raster of Rel-8/9 and at the same time preserve orthogonality of the subcarriers with 15 kHz spacing. Depending on the aggregation scenario, the n x 300 kHz spacing can be facilitated by insertion of a low number of unused subcarriers between contiguous CCs.

### 7.5 Carrier Aggregation

When CA is configured, the UE only has one RRC connection with the network. At RRC connection establishment/re-establishment/handover, one serving cell provides the NAS mobility information (e.g. TAI), and at RRC connection re-establishment/handover, one serving cell provides the security input. This cell is referred to as the Primary Cell (PCell). In the downlink, the carrier corresponding to the PCell is the Downlink Primary Component Carrier (DL PCC) while in the uplink it is the Uplink Primary Component Carrier (UL PCC).

Depending on UE capabilities, Secondary Cells (SCells) can be configured to form together with the PCell a set of serving cells. In the downlink, the carrier corresponding to an SCell is a Downlink Secondary Component Carrier (DL SCC) while in the uplink it is an Uplink Secondary Component Carrier (UL SCC).

The configured set of serving cells for a UE therefore always consists of one PCell and one or more SCells:
- For each SCell the usage of uplink resources by the UE in addition to the downlink ones is configurable (the number of DL SCCs configured is therefore always larger than or equal to the number of UL SCCs and no SCell can be configured for usage of uplink resources only);
- From a UE viewpoint, each uplink resource only belongs to one serving cell;
- The number of serving cells that can be configured depends on the aggregation capability of the UE (see subclause 5.5);
- PCell can only be changed with handover procedure (i.e. with security key change and RACH procedure);
- PCell is used for transmission of PUCCH;
- Unlike SCells, PCell cannot be de-activated (see subclause 11.2);
- Re-establishment is triggered when PCell experiences RLF, not when SCells experience RLF;
- NAS information is taken from PCell.

The reconfiguration, addition and removal of SCells can be performed by RRC. At intra-LTE handover, RRC can also add, remove, or reconfigure SCells for usage with the target PCell. When adding a new SCell, dedicated RRC signalling is used for sending all required system information of the SCell i.e. while in connected mode, UEs need not acquire broadcasted system information directly from the SCells.

Furthermore, 3GPP TR 36.842 captures potential higher layer technologies to be considered for enhanced support of small cell deployments in E-UTRA and E-UTRAN. Section 8.1.1 of 3GPP TR 36.842 describes several alternatives for user plane architecture for dual connectivity. Some alternatives support bear split; some do not. In addition, the following terms are defined:
**Bearer Split:** in dual connectivity, refers to the ability to split a bearer over multiple eNBs.
**Dual Connectivity:** Operation where a given UE consumes radio resources provided by at least two different network points (Master and Secondary eNBs) connected with non-ideal backhaul while in RRC_CONNECTED.
**Master eNB (MeNB):** in dual connectivity, the eNB which terminates at least S1-MME and therefore act as mobility anchor towards the CN.
**Secondary eNB (SeNB):** in dual connectivity, an eNB providing additional radio resources for the UE, which is not the Master eNB.

In addition, agreements have been made in the RAN2#83bis meeting on terminology for small cell enhancements as follows:
2 The maximum total number of serving cells per UE is 5 as for carrier aggregation.
   FFS: The maximum number of TAGs per UE is 4 as for carrier aggregation.
3 Carrier aggregation is supported in the MeNB and in the SeNB, i.e., the MeNB and the SeNB may have multiple service cells for a UE.
4 MCG (Master Cell Group) is the group of serving cells associated with the MeNB.
5 SCG (Secondary Cell Group) is the group of the serving cells associated with the SeNB.
6 In Dual Connectivity a UE is connected to one MeNB and one SeNB.
7 A TAG may only comprise cells of one eNB.
   FFS whether there is one PCell in the MeNB and one in the SeNB or whether there is just one Cell per UE
8 We aim to realize options 1A and/or 3C by RRC Configuration. Deviations in the protocol stack for different configurations should be limited. (we should not introduce a new specification for PDCP-SeNB)

In addition, 3GPP R2-133992 proposes that at least one serving cell of the SCG shall always be activated upon configuration. Also, 3GPP R2-134219 defines three bearer types and proposes four signaling procedures for dual connectivity as follows:
The signalling sequences assume the common architecture as presented in [2], where the following three bearer types are proposed:
   1. bearers served by MeNB, referred to as MCG DRBs
   2. bearers served by SeNB, referred to as SCG DRBs
   3. bearers served by MeNB and SeNB, referred to as split DRBs
The following scenarios are depicted:
   - Offload of traffic from resources provided by the MeNB towards resources provided by the SeNB;
   - Modification of RRC configuration related to the SeNB connection;
   - Removal of resources provided by the SeNB for the UE;
   - Change of MeNB while keeping one SeNB under service.

Detail signaling procedures for the above four scenarios are illustrated in Figures 2.2-1, 2.3-1, 2.4.1-1, and 2.5-1 of 3GPP R2-134219. Also, similar signaling procedures for dual connectivity are proposed in 3GPP R2-134266. Furthermore, 3GPP R2-133855 discusses Buffer Status Reporting (BSR) and Scheduling Request (SR) for dual connectivity. In general, 3GPP R2-133855 proposes that in dual connectivity two BSR and SR procedures are separately running for the two MAC entities, and does not require any changes to the BSR triggering mechanisms for dual connectivity.

With respect to buffer status reports (BSR), the protocol architecture for the user plane proposed in 3GPP R2-130570 seems to suggest a radio bearer (RB) based allocation between the macro eNB and the small cell eNB. For example, signaling RBs (SRBs) allocated to the macro eNB and data RBs (DRBs) are allocated either to the macro eNB or to the small cell eNB. If separate eNBs are adopted for supporting dual connectivity, it could be expected that there would be a scheduler in the small cell eNB in addition to the scheduler in the macro eNB. Since a buffer status report (BSR) is used for scheduling, it seems necessary to consider if changes to buffer status reporting would be needed to support separate schedulers.

In RAN2#83bis meeting, it was agreed that Carrier Aggregation (CA) would be supported in the MeNB (Master eNB) and in the SeNB (i.e., the MeNB and the SeNB may have multiple serving cells for a UE). The group of serving cells associated with the MeNB is called a master cell group (MCG); and the group of serving cells associated with the SeNB is called a secondary cell group (SCG).

To support separate schedulers, it could be expected that the scheduler in the small cell eNB would need to know the buffer sizes of logical channels (or radio bearers) allocated to the small cell eNB so that the scheduler could perform scheduling for uplink transmissions according to the buffer sizes that need to be handled.

*A. Activation of a Small Cell* - When a small cell is activated, the small cell eNB would need to know the current buffer sizes of the logical channels allocated to the small cell eNB in order to start scheduling radio resources for uplink transmissions on the small cell. Thus, a new trigger for Regular BSR would be beneficial. In particular, a Regular BSR for the small cell eNB would be triggered when the small cell is activated for the first time.

After the small cell is activated, a PDCCH (Physical Downlink Control Channel) order may be received from the macro eNB/the small cell eNB to initiate a random access procedure on the small cell. Thus, it would be fine for the UE to postpone the trigger for Regular BSR until the PDCCH order is received. For example, a Regular BSR for the small cell eNB should be triggered when the UE receives a PDCCH order.

In one embodiment, one additional condition should be considered for triggering the Regular BSR. For example, the Regular BSR should be triggered if there is data available for transmission on the logical channels allocated to the small cell eNB. In another embodiment, the Regular BSR could contain or include buffer sizes of logical channels allocated to the small cell eNB, but not buffer sizes of logical channels allocated to the macro eNB. In other embodiments, the small cell eNB could contain or include at least one MAC entity associated with the UE.

*B. Removal of a Small Cell -* When the small cell is removed from the UE, the macro eNB takes over the logical channels allocated to the small cell eNB. Thus, it would be beneficial for the UE to trigger a Regular BSR for the macro eNB when the small cell is removed from the UE, which would allow the macro eNB to know the current buffers sizes of the logical channels (including the logical channels that the macro eNB has taken over from the small cell eNB) to be handled, In one embodiment, the Regular BSR should be triggered if there is data available for transmission on the logical channels taken over by the macro eNB. In another embodiment, the Regular BSR could contain or include buffer sizes of logical channels allocated to the macro eNB.

*C. Triggering a Regular BSR for the Macro eNB -* In general, it would be beneficial for the UE to trigger a Regular BSR for the macro eNB when buffers of logical channels allocated to the small cell eNB become empty so that the macro eNB could deactivate or remove the small cell if there is also no downlink data for transmission on the small cell. In one embodiment, the Regular BSR could contain or include buffer sizes of logical channels allocated to the small cell eNB, but not buffer sizes of logical channels allocated to the macro eNB. Alternatively, an MAC control element with a specific logical channel ID (LCID) field could be defined to indicate empty buffers of logical channels allocated to the small cell eNB. In this alternative, no buffer size field would be needed in the MAC control element.

The UE may need to maintain at least two separate *periodicBSR-Timers,* one for the macro eNB and one for the small cell eNB. In principle, when a *periodicBSR-Timer* expires, the UE triggers a Periodic BSR for the corresponding eNB. To achieve the same purpose in the previous paragraph, the UE could transmit a Periodic BSR, which contains buffer sizes of logical channels allocated to the small cell eNB (but not buffer sizes of logical channels allocated to the macro eNB), to the macro eNB in addition to the small cell eNB when *a periodicBSR-Timer* corresponding to the small cell eNB expires. Alternatively, when a *periodicBSR-Timer* corresponding to the macro eNB expires, the UE could transmit a Periodic BSR, which contains buffer sizes of logical channels allocated to the macro eNB and buffer sizes of logical channels allocated to the small cell eNB, to the macro eNB. Based on the Periodic BSR, the macro eNB would know if buffers of logical channels allocated to the small cell eNB become empty.

*D. After Deactivation of the Small Cell -* After the small cell is deactivated due to no more data for transmission, the UE needs to trigger a Regular BSR for the macro eNB when data of logical channels allocated to the small cell eNB become available so that the macro eNB can activate the small cell again. On the other hand, the UE shall trigger a Regular BSR for the small cell eNB when data of logical channels allocated to the small cell eNB become available, if the small cell is in activated state.

In view of the above, the UE also needs to trigger a Regular BSR for the small cell eNB when the small cell is activated again. Another alternative is to consider a small cell as always activated so that the UE can send the Regular BSR to the small cell eNB when data of logical channels allocated to the small cell eNB become available. In one embodiment, whether to consider a small cell as always activated or not is configurable e.g. by an RRC signalling used to configure the small cell to the UE.

*E. After Configuring the Small Cell -* After a small cell is configured to a UE, it is likely that the UE would need to transmit buffer sizes of logical channels allocated to the small cell eNB to the macro eNB. There are two potential options:
1. A BSR containing only buffer sizes of logical channels allocated to the small cell eNB: Since the macro eNB also receives other BSR containing only buffer sizes of logical channels allocated to the macro eNB, there should be a field in the BSR for indicating content of a BSR.
2. A BSR containing buffer sizes of logical channels allocated to the small cell eNB and buffer sizes of logical channels allocated to the macro eNB as follows:
   - Since, as described in the current MAC specification, a buffer size field in a BSR identifies the total amount of data available across all logical channels of a logical channel group (LCG) and logical channels of the same LCG may be allocated to both the macro eNB and small cell eNB, there would be a need to define separate buffer size fields for logical channels allocated to the macro eNB and for logical channels allocated to the small cell eNB. Otherwise, the macro eNB would not be able to distinguish the buffer sizes for the small cell eNB from the buffer sizes for the macro eNB.
   - An alternative would be to allocate logical channels to the small eNB in a LCG-based way so that the macro eNB could distinguish the buffer sizes for the small cell eNB from the buffer sizes for the macro eNB according to the LCG identifier (LCG ID) included in a BSR.

Furthermore, 3GPP R2-133992 proposes that at least one serving cell in the SCG shall always be activated upon configuration, like PCell defined for Rel-11 in 3GPP TS 36.321 V11.3.0. If the proposal in 3GPP R2-133992 is adopted for the first small cell configured to a UE, BSR triggering due to addition of the first small cell should be reconsidered because there would be no Activation/Deactivation MAC control element for activating the first small cell.

According to 3GPP R2-134219 and 3GPP R2-134266, coordination between MeNB (Master eNB) and SeNB (Secondary eNB) would be performed before the decision of providing additional SeNB resources to the UE. Thus, a potential solution for the SeNB to get the buffer status of the UE would be that the MeNB sends the buffer status stored in the MeNB to the SeNB during the coordination for adding the first small cell to the UE. In one embodiment, the buffer status could contain or include buffer sizes of logical channels served by the SeNB. In another embodiment, the first small cell could be configured with a PUCCH (Physical Uplink Control Channel) for scheduling request (SR) and/or HARQ (Hybrid Automatic Repeat reQuest) feedback.

However, the buffer status stored in the MeNB may not be up-to-date. Considering that typically the first small cell is added while the traffic is piling up and cannot be consumed by the macro cells, the difference between the buffer status stored in the MeNB and the up-to-date buffer status in the UE might be large because of no new BSR being triggered during this period. Thus, a better solution would be for the UE to trigger an up-to-date Regular BSR to the SeNB when the first small cell is added to the UE.

In one embodiment, one additional condition could be considered for triggering the Regular BSR. For example, the Regular BSR could be triggered if there is data available for transmission to the SeNB. In another embodiment, the Regular BSR could contain or include buffer sizes of logical channels served by the SeNB. In other embodiments, the first small cell would be configured with a PUCCH for scheduling request (SR) and/or HARQ feedback.

Similarly, the UE should also trigger a Regular BSR to the MeNB when the last small cell is removed so that the MeNB would know the buffer size of all logical channels. In one embodiment, one additional condition could be considered for triggering the Regular BSR. For example, the Regular BSR could be triggered if there is data available for transmission to the MeNB. In another embodiment, the last small cell could be configured with a PUCCH for scheduling request (SR) and/or HARQ feedback.

Alternatively, the SeNB could send the buffer status stored in the SeNB to the MeNB during the coordination for removing the last small cell. In one embodiment, the last small cell could be configured with a PUCCH for scheduling request (SR) and/or HARQ feedback.

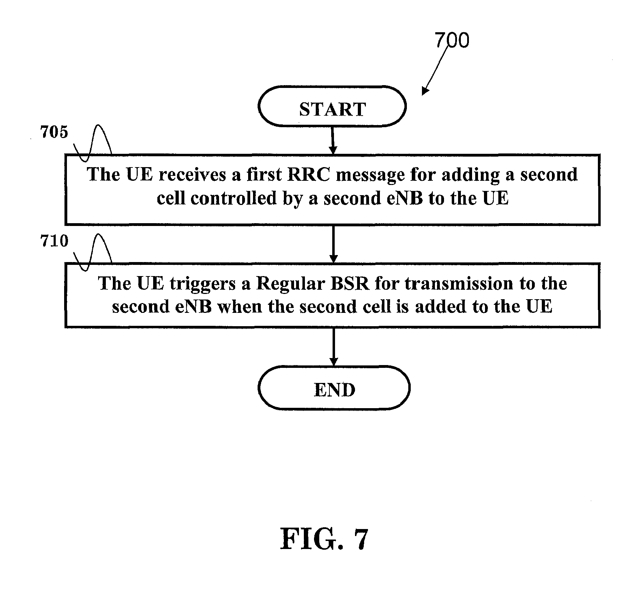

FIG. 7 is a flow chart 700 in accordance with one exemplary embodiment. In general, the flow chart 700 illustrates a method for triggering a Regular BSR in dual connectivity, wherein a UE is served by a first eNB. In step 705, the UE receives a first RRC (Radio Resource Control) message for adding a second cell controlled by a second eNB to the UE. Then, the UE triggers a Regular BSR for transmission to the second eNB, in step 710, when the second cell is added in the UE.

Referring back to FIGs. 3 and 4, in one embodiment, the device 300 could include a program code 312 stored in memory 310 to trigger a Regular BSR in dual connectivity, wherein a UE is served by a first eNB. In one embodiment, the CPU 308 could execute the program code 312 enable the UE (i) to receive a first RRC message for adding a second cell controlled by a second eNB to the UE, and (ii) to trigger a Regular BSR for transmission to the second eNB when the second cell is added in the UE. In addition, the CPU 308 could execute the program code 312 to perform all of the above-described actions and steps or others described herein.

In one embodiment, the second cell could be considered as always activated and could be configured with a PUCCH (Physical Uplink Control Channel). Furthermore, the Regular BSR could be triggered if there is data available for transmission to the second eNB.

In one embodiment, a set of logical channels could be configured to the UE, and at least one logical channel of the set of logical channels is to be served by the second eNB. In addition, the Regular BSR could contain or include the buffer size of the logical channel to be served by the second eNB. Furthermore, the first RRC message could contain or include information to indicate the logical channel(s) to be served by the second eNB.

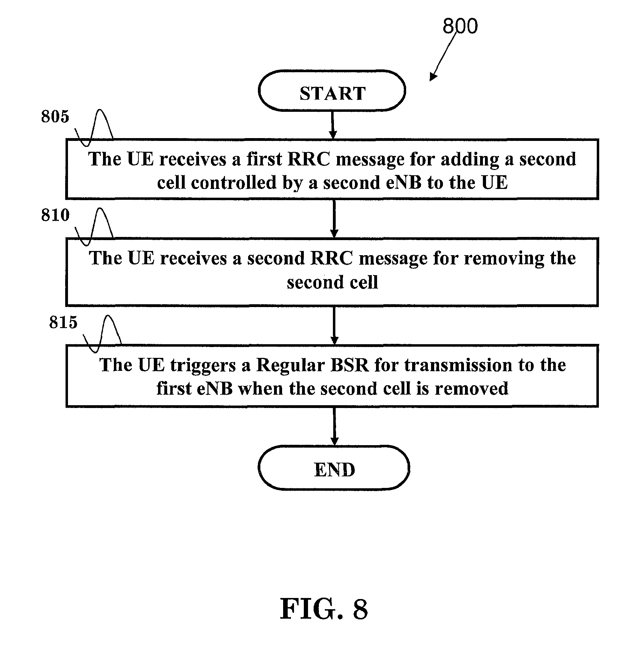

FIG. 8 is a flow chart 800 in accordance with one exemplary embodiment. In general, the flow chart 800 illustrates a method for triggering a Regular BSR in dual connectivity, wherein a UE is served by a first eNB. In step 805, the UE receives a first RRC message for adding a second cell controlled by a second eNB to the UE. In addition, the UE could receive a second RRC message for removing the second cell in step 810. Then, the UE would trigger a Regular BSR for transmission to the first eNB, in step 815, when the second cell is removed in the UE.

Referring back to FIGs. 3 and 4, in one embodiment, the device 300 could include a program code 312 stored in memory 310 to trigger a Regular BSR in dual connectivity, wherein a UE is served by a first eNB. In one embodiment, the CPU 308 could execute the program code 312 enable the UE to receive a first RRC message for adding a second cell controlled by a second eNB to the UE. In addition, the UE could receive a second RRC message for removing the second cell. Then, the UE would trigger a Regular BSR for transmission to the first eNB when the second cell is removed in the UE. Furthermore, the CPU 308 could execute the program code 312 to perform all of the above-described actions and steps or others described herein.

In one embodiment, the second cell could be considered as always activated and could be configured with a PUCCH (Physical Uplink Control Channel). Furthermore, the Regular BSR could be triggered if there is data available for transmission to the first eNB.

In one embodiment, a set of logical channels could be configured to the UE, and at least one logical channel of the set of logical channels is to be served by the second eNB. In addition, the Regular BSR could contain or include the buffer sizes of the set of logical channels. Furthermore, the first RRC message could contain or include information to indicate the logical channel(s) to be served by the second eNB.

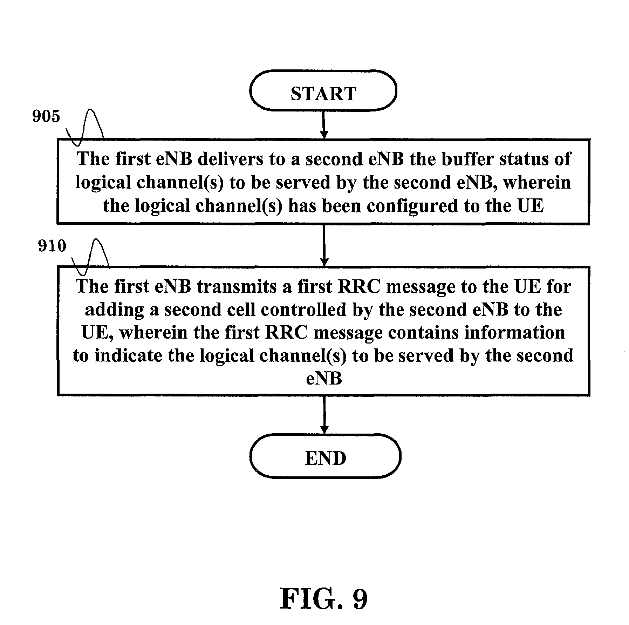

FIG. 9 is a flow chart 900 in accordance with one exemplary embodiment. In general, the flow chart 900 illustrates a method for transferring a buffer status for dual connectivity, wherein a UE is served by a first eNB. In step 905, the first eNB delivers to a second eNB the buffer status of logical channel(s) to be served by the second eNB, wherein the logical channel(s) has been configured to the UE. In step 910, the first eNB transmits a first RRC message to the UE for adding a second cell controlled by the second eNB to the UE, wherein the first RRC message contains or includes information to indicate the logical channel(s) to be served by the second eNB.

Referring back to FIGs. 3 and 4, in one embodiment, the device 300 could include a program code 312 stored in memory 310 to trigger a Regular BSR in dual connectivity, wherein a UE is served by a first eNB. In one embodiment, the CPU 308 could execute the program code 312 enable the first eNB (i) to deliver to a second eNB the buffer status of logical channel(s) to be served by the second eNB, wherein the logical channel(s) has been configured to the UE, and (ii) to transmit a first RRC message to the UE for adding a second cell controlled by the second eNB to the UE, wherein the first RRC message contains or includes information to indicate the logical channel(s) to be served by the second eNB. In addition, the CPU 308 could execute the program code 312 to perform all of the above-described actions and steps or others described herein.

In one embodiment, the second cell could be considered as always activated. Furthermore, the second cell could be configured with a PUCCH (Physical Uplink Control Channel). In addition, the second cell could be configured with a PUSCH (Physical Uplink Shared Channel). Also, the first RRC message could be an RRC Connection Reconfiguration message.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for triggering a Regular Buffer Status Report, in the following also referred to as BSR, in dual connectivity, wherein a User Equipment, in the following also referred to as UE, is served by a first evolved Node B, in the following also referred to as eNB, comprising:
the UE receives a first Radio Resource Control, in the following also referred to as RRC, message for adding a second cell controlled by a second eNB to the UE (705); and
the UE triggers a Regular BSR for transmission to the second eNB when the second cell is added (710).

2. The method of claim 1, wherein the Regular BSR contains buffer size of a logical channel to be served by the second eNB.

3. The method of claim 1 or 2, wherein the first RRC message contains information to indicate a logical channel to be served by the second eNB.

4. The method of anyone of claims 1 to 3, wherein the Regular BSR is triggered if there is data available for transmission to the second eNB.

5. A method for triggering a Regular Buffer Status Report, in the following also referred to as BSR, in dual connectivity, wherein a User Equipment, in the following also referred to as UE, is served by a first evolved Node B, in the following also referred to as eNB, comprising:
the UE receives a first Radio Resource Control, in the following also referred to as RRC, message for adding a second cell controlled by a second eNB to the UE (805); and
the UE triggers a Regular BSR for transmission to the first eNB when the second cell is removed (815).

6. The method of claim 5, wherein the UE receives a second RRC message for removing the second cell.

7. The method of claim 5 or 6, wherein the Regular BSR contains buffer sizes of a set of logical channels configured to the UE.

8. The method of anyone of claims 5 to 7, wherein the Regular BSR is triggered if there is data available for transmission to the first eNB.

9. The method of anyone of claims 1 to 8, wherein the second cell is always activated, and/or
wherein the second cell is configured with a Physical Uplink Control Channel, in the following also referred to as PUCCH.

10. The method of anyone of claims 1 to 9, wherein a set of logical channels are configured to the UE, and at least one logical channel of the set of logical channels is to be served by the second eNB.

11. A method for transferring a buffer status for dual connectivity, wherein a User Equipment, in the following also referred to as US, is served by a first evolved Node B, in the following also referred to as eNB, comprising:
the first eNB delivers to a second eNB the buffer status of logical channel(s) to be served by the second eNB, wherein the logical channel(s) has been configured to the UE (905); and
the first eNB transmits a first RRC (Radio Resource Control) message to the UE for adding a second cell controlled by the second eNB to the UE, wherein the first RRC message contains information to indicate the logical channel(s) to be served by the second eNB (910).

12. The method of claim 11, wherein the second cell is always activated, and/or
wherein the second cell is configured with a Physical Uplink Control Channel, in the following also referred to as PUCCH, and/or
wherein the second cell is configured with a Physical Uplink Shared Channel, in the following also referred to as PUSCH.

13. The method of claim 11 or 12, wherein the first RRC message is an RRC Connection Reconfiguration message.

14. A communication device (300) for triggering a Regular Buffer Status Report, in the following also referred to as BSR, in dual connectivity, wherein a User Equipment, in the following also referred to as UE, is served by a first evolved Node B, in the following also referred to as eNB, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to enable the UE to perform the method steps as defined in anyone of the preceding claims 1 to 10.

15. A communication device (300) for transferring a buffer status for dual connectivity, wherein a User Equipment, in the following also referred to as UE, is served by a first evolved Node B, in the following also referred to as eNB, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to enable the first eNB to perform the method steps as defined in anyone of the preceding claims 11 to 13.
